(19) Europäisches Patentamt / European Patent Office / Office européen des brevets

(11) **EP 1 754 297 B1**

(12) **EUROPÄISCHE PATENTSCHRIFT**

(45) Veröffentlichungstag und Bekanntmachung des Hinweises auf die Patenterteilung:
**06.05.2009  Patentblatt 2009/19**

(51) Int Cl.:
*H02K 1/17* *(2006.01)*      *H02K 23/04* *(2006.01)*
*H02K 21/26* *(2006.01)*

(21) Anmeldenummer: 05716958.3

(22) Anmeldetag: **09.03.2005**

(86) Internationale Anmeldenummer:
**PCT/EP2005/051034**

(87) Internationale Veröffentlichungsnummer:
**WO 2005/117234 (08.12.2005 Gazette 2005/49)**

(54) **ELEKTRISCHE MASCHINE**

ELECTRIC MACHINE

MACHINE ELECTRIQUE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **29.05.2004  DE 102004026403**

(43) Veröffentlichungstag der Anmeldung:
**21.02.2007  Patentblatt 2007/08**

(73) Patentinhaber: **ROBERT BOSCH GMBH**
**70442 Stuttgart (DE)**

(72) Erfinder: **BERNAUER, Christof**
**76596 Hundsbach (DE)**

(56) Entgegenhaltungen:
**EP-A- 0 050 814**          **FR-A- 2 814 294**
**GB-A- 183 632**            **GB-A- 2 193 385**

• **PATENT ABSTRACTS OF JAPAN Bd. 2003, Nr. 12, 5. Dezember 2003 (2003-12-05) -& JP 2003 333775 A (AICHI STEEL WORKS LTD), 21. November 2003 (2003-11-21)**

**Beschreibung**

Stand der Technik

Die Erfindung geht aus von einer elektrische Maschine nach dem Oberbegriff des Patentanspruchs 1.

Permanenterregte Gleichstrommotoren weisen Permanentmagnete auf, die in axialer Richtung länger oder zumindest gleich lang ausgeführt sind als das gegenüberstehende Blechpaket. Bei Kommutatormotoren ist dies der Anker bzw. Rotor, bei bürstenlosen Motoren das Statorpaket. In den meisten Fällen werden heute für sogenannte "Automotive"-Anwendungen Permanentmagnete aus Hartferrit eingesetzt. Diese Magnete werden in der Regel deutlich länger ausgeführt als das Blechpaket, um zusätzlichen Fluss im Motor zu erzeugen.

Bei der Verwendung von hochwertigen, teuren Magnetmaterialien wie z.B. NdFeB bzw. kunststoffgebundenes NdFeB treten sehr hohe magnetische Flussdichten im Eisenpaket auf. Werden diese hohe Flussdichten in Kauf genommen, führen sie zu Sättigungserscheinungen und damit zu sehr hohen Magnetkosten. Wird der Eisenquerschnitt am Blechpaket entsprechend vergrößert, um diese Sättigungseffekte zu vermeiden, bleibt nur wenig Wickelraum für die Motorwicklung. Dies führt dann zu einem größeren Motorvolumen und damit indirekt auch wieder zu höheren Motorkosten.

Mit der GB 183632-A ist ein elektrischer Generator bekannt geworden, bei dem ein Rotor innerhalb eines Elektromagneten angeordnet ist. Der Rotor weist hier ein Ankerpaket auf, auf dem elektrische Wicklungen angeordnet sind, wobei das Ankerpaket axial auf einer Seite über den Elektromagneten hinausragt.

Die GB 2193385-A zeigt einen elektrischen Mikromotor mit einem in einem Gehäuse angeordneten Permanentmagneten, wobei ein Rotor in axialer Richtung den Permanentmagneten überragt.

FR 2 814 294 zeigt eine elektrische Maschine für die Verwendung in einem Kraftfahrzeug. Vorteile der Erfindung

Die erfindungsgemäße elektrische Maschine mit den Merkmalen des Patentanspruchs 1 hat demgegenüber den Vorteil, dass die elektrische Maschine kleiner gebaut und somit nennenswert Kosten eingespart werden können. Dies erfolgt durch die Verwendung eines kürzeren Permanentmagneten. Durch geeignete Geometrieauslegung kann einerseits der Wickelraum für die Motorwicklung ausreichend groß bemessen werden und andererseits können trotzdem Sättigungseffekte im Blechpaket vermieden werden.

Bei geeigneter Dimensionierung des Blechschnittes des Ankers oder des Stators kann sich der vom Permanentmagnet erzeugte Fluss über die gesamte axiale Länge des Blechpakets "ausbreited' obwohl bisher davon ausgegangen wurde, dass dies nicht funktioniert. Messungen beweisen aber, das sich der Fluss tatsächlich axial verteilt. Damit kann die Breite der Zahnstege schmäler ausgelegt werden, was dann wiederum einen größeren Nutquerschnitt und somit Wickelraum ermöglicht.

Hierzu weist die elektrische Maschine einen Anker umfassend ein Ankerpaket, auf dem eine Wicklung angeordnet ist, und ein Gehäuse, in dem zumindest wenigstens ein Permanent-magnet, der zumindest als Ringmagnetsegment ausgebildet ist, angeordnet ist, auf, wobei das Ankerpaket axial über den Permanent magneten übersteht.

Zur optimale Ausbreitung des Magnetflusses ist der Permanent magnet axial mittig zum Ankerpaket ausgerichtet.

Die axiale Länge des Permanent magneten wird dann kürzer ausgelegt als die axiale Länge des Ankerpakets. Vorzugsweise entspricht die Länge des Ankerpakets abzüglich der Länge des Permanent magneten einem Faktor aus der Dicke des Permanent magneten multipliziert mit einer beliebigen Zahl zwischen 1 und 8, vorzugsweise 1,5 und 5. Die Magnetlänge ist um 1 bis 8 mm kürzer als das Ankerpaket, d.h. der Permanent magnet hat im Gegensatz zum üblichen "Magnetüberstand" einen "Unterstand" pro Seite von 0,5 bis 4mm. Besonders vorteilhaft hat sich ein Permanent magnet, der 3 bis 5 mm kürzer als das Blechpaket ist, erwiesen.

Die Verkürzung des Permanent magneten ist besonders sinnvoll bei der Verwendung von Seltenerd-Magneten, speziell bei NdFeB-Magneten bzw. kunststoffgebundene NdFeB-Magneten.

Weitere Vorteile und vorteilhafte Weiterbildungen ergeben sich aus den Unteransprüchen und der Beschreibung.

Zeichnung

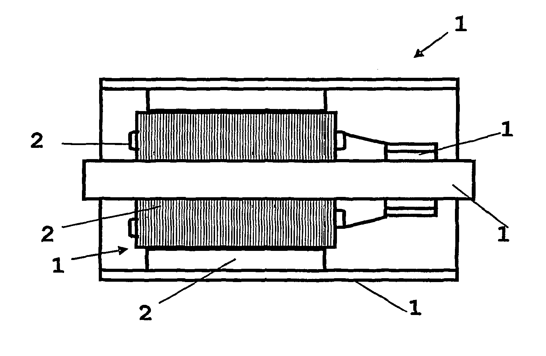

Ein Ausführungsbeispiel ist in der Zeichnung dargestellt und in der nachfolgenden Beschreibung näher erläutert. In der einzigen Figur ist eine elektrische Maschine in einem Längsschnitt gezeigt.

Beschreibung des Ausfuhrungsbeispiels

Die elektrische Maschine 10 in der Figur ist Teil einer Antriebseinheit, die Verwendung in einem Kraftfahrzeug findet. Bei der Antriebseinheit kann es sich um einen Fensterheber, Schiebdachantrieb, Triebstrangsteller, Sitzverstellantrieb einer Kfz-Sitzverstellung, Lüfter, eine Pumpen oder dergleichen handeln.

Die elektrische Maschine 10 umfasst ein vorzugsweise gerolltes Gehäuse 12, in dem mit einer nicht gezeigten Lagerung ein Anker 14 angeordnet ist. Der Anker 16 umfasst eine Welle 16 mit einem Kommutator 18. Auf der Welle 16 ist ein Ankerpaket 20 mit einer Wicklung 22, die mit dem Kommutator 18 verbunden ist, angeordnet. Das Ankerpaket 20 ist ein stanzpaketierter Lamellenverbund.

Im Gehäuse 12 ist ein Ringmagnet 24 angeordnet. Alternativ können es auch zwei oder mehr schalenförmig Magnete sein. Bei typischerweise zwei Magnetschalen, die dann nur Ringmagnetsegmente wären, würden diese am Umfang beispielsweise jeweils einen Winkel von 120° einschließen und sich im Gehäuse 12 diametral gegenüberliegen. Der Ringmagnet 24 ist ein Seltenerd-Magnet, insbesondere NdFeB-Magnet oder kunststoffgebundener NdFeB-Magnet.

Das Ankerpaket 20 ist steht axial über den Ringmagneten 24 über.

Ideal hat sich als Maß für diesen Überstand des Ankerpakets 20 erwiesen:

$$\text{Länge des Ankerpakets 20} \ - \ \text{Länge des Magnets 24} \ = \ a * \text{Dicke des Magneten 24,}$$

wobei a eine beliebige Zahl zwischen 1 und 8, vorzugsweise 1,5 und 5, ist. Die Dicke des Magneten 24 beträgt beispielsweise 1 bis 8 mm.

Das Ankerpaket 20 ist 1 bis 8 mm länger als der Ringmagnet 24, wobei das Ankerpaket 20 vorzugsweise 3 bis 5 mm länger als der Ringmagnet 24 ist. Dabei ist der Ringmagnet 24 in axialer Richtung gesehen mittig zum Ankerpaket 20 ausgerichtet.

**Patentansprüche**

1. Elektrische Maschine (10) für die Verwendung in einem Kraftfahrzeug, mit einem Anker (14) umfassend ein Ankerpaket (20), auf dem eine Wicklung (22) angeordnet ist, und mit einem Gehäuse (12), in dem wenigstens ein Permanentmagnet (24) der zumindest als Ringmagnetsegment ausgebildet ist, angeordnet ist, **dadurch gekennzeichnet, dass** das Ankerpaket (20) axial über den wenigstens einen Permanentmagneten (24) übersteht, wobei die axiale Länge des Permanentmagneten (24) kürzer ausgelegt ist als die axiale Länge des Ankerpakets (20), wobei das Ankerpaket (20) 1 mm bis 8 mm länger als der wenigstens eine Permanentmagnet (24) ist, und das Ankerpaket (20) als ein stanzpaketierter Lamellenverbund gebildet ist, und der wenigstens eine Permanentmagnet (24) axial mittig zum Ankerpaket (20) ausgerichtet ist

2. Elektrische Maschine (10) nach Anspruch 1, **dadurch gekennzeichnet, dass** die Länge des Ankerpakets (20) - die Länge des Permanentmagnets (24) = a * die Dicke des Permanentmagneten (24) ist, wobei a eine beliebige Zahl zwischen 1 und 8, vorzugsweise 1,5 und 5, ist.

3. Elektrische Maschine (10) nach einem der vorhergehenden Ansprüche, **dadurch gekennzeichnet, dass** das Ankerpaket (20) 3 mm bis 5 mm länger als der wenigstens eine Permanentmagnet (24) ist.

4. Elektrische Maschine (10) nach einem der vorhergehenden Ansprüche, **dadurch gekennzeichnet, dass** der wenigstens eine Permanentmagnet (24) ein Seltenerd-Magnet, insbesondere NdFeB-Magnet oder kunststoffgebundener NdFeB-Magnet, ist.

5. Elektrische Maschine (10) nach einem der vorhergehenden Ansprüche, **dadurch gekennzeichnet, dass** der wenigstens eine Permanentmagnet (24) ein Ringmagnet ist.

**Claims**

1. Electrical machine (10) for use in a motor vehicle, having an armature (14) comprising an armature stack (20) on which a winding (22) is arranged, and having a housing (12) in which at least one permanent magnet (24), which is in the form at least of a ring magnet segment, is arranged, **characterized in that** the armature stack (20) projects axially beyond the at least one permanent magnet (24), with the axial length of the permanent magnet (24) being shorter than the axial length of the armature stack (20), with the armature stack (20) being 1 mm to 8 mm longer than the at least one permanent magnet (24), and the armature stack (20) being in the form of a punch-stacked composite arrangement of laminations, and the at least one permanent magnet (24) being oriented axially in the centre relative to the armature stack (20).

**2.** Electrical machine (10) according to Claim 1, **characterized in that** the length of the armature stack (20) - the length of the permanent magnet (24) = a * the thickness of the permanent magnet (24), where a is any desired number between 1 and 8, preferably between 1.5 and 5.

**3.** Electrical machine (10) according to one of the preceding claims, **characterized in that** the armature stack (20) is 3 mm to 5 mm longer than the at least one permanent magnet (24).

**4.** Electrical machine (10) according to one of the preceding claims, **characterized in that** the at least one permanent magnet (24) is a rare-earth magnet, in particular an NdFeB magnet or a plastic-bound NdFeB magnet.

**5.** Electrical machine (10) according to one of the preceding claims, **characterized in that** the at least one permanent magnet (24) is a ring magnet.

**Revendications**

**1.** Machine électrique (10) pour l'utilisation dans un véhicule automobile, avec un rotor (14) comprenant un noyau de rotor (20) sur lequel est prévu un enroulement (22), et avec un boîtier (12) dans lequel est disposé au moins un aimant permanent (24) qui est réalisé au moins sous forme de segment d'aimant annulaire, **caractérisée en ce que** le noyau de rotor (20) dépasse axialement au-delà de l'au moins un aimant permanent (24), la longueur axiale de l'aimant permanent (24) étant plus courte que la longueur axiale du noyau de rotor (20), le noyau de rotor (20) mesurant 1 mm à 8 mm de plus en longueur que l'au moins un aimant permanent (24), le noyau de rotor (20) étant réalisé sous forme de composite stratifié feuilleté par estampage, et l'au moins un aimant permanant (24) étant orienté axialement centralement par rapport au noyau de rotor (20).

**2.** Machine électrique (10) selon la revendication 1, **caractérisée en ce que** la longueur du noyau de rotor (20) moins la longueur de l'aimant permanent (24) vaut a * l'épaisseur de l'aimant permanent (24), a étant un nombre quelconque compris entre 1 et 8, de préférence 1,5 et 5.

**3.** Machine électrique (10) selon l'une quelconque des revendications précédentes, **caractérisée en ce que** le noyau de rotor (20) mesure 3 mm à 5 mm de plus en longueur que l'au moins un aimant permanent (24).

**4.** Machine électrique (10) selon l'une quelconque des revendications précédentes, **caractérisée en ce que** l'au moins un aimant permanent, (24) est un aimant à terres rares, notamment un aimant en NdFeB ou un aimant en NdFeB à liaison plastique.

**5.** Machine électrique (10) selon l'une quelconque des revendications précédentes, **caractérisée en ce que** l'au moins un aimant permanent (24) est un aimant annulaire.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 183632 A
- GB 2193385 A
- FR 2814294